# EUROPEAN PATENT APPLICATION

(11) **EP 4 742 734 A1**
(43) Date of publication of application: **13.05.2026**
(21) Application number: 24850695.8
(22) Date of filing: 25.06.2024
(51) Int. Cl.: H04W 24/02

(54) **COMMUNICATION METHOD AND APPARATUS**

(30) Priority: 10.08.2023 CN 202311008107
(71) Applicant: Huawei Technologies Co., Ltd., Shenzhen, Guangdong 518129 (CN)
(72) Inventor: CHENG, Wenjie, Shenzhen, Guangdong 518129 (CN); GENG, Tingting, Shenzhen, Guangdong 518129 (CN); ZENG, Yu, Shenzhen, Guangdong 518129 (CN); YANG, Xudong, Shenzhen, Guangdong 518129 (CN); RAPONE, Damiano, Shenzhen, Guangdong 518129 (CN)
(74) Representative: MERH-IP Matias Erny Reichl Hoffmann Patentanwälte PartG mbB
(86) International application number: PCT/CN2024/101297
(87) International publication number: WO 2025/031044

(57) **Abstract**

A communication method and apparatus are provided, and relate to the field of communication technologies. The method includes: receiving first information from a first network device; sending the first information to a second network device; receiving a second MDT configuration from the second network device; and performing MDT measurement based on the second MDT configuration. The first information indicates a first MDT configuration, the first MDT configuration includes an MDT configuration corresponding to a terminal device, and the second MDT configuration is obtained based on the first MDT configuration. In the method provided in embodiments of this application, after the terminal device enters a connected state from an idle state, the terminal device may send, to the newly connected second network device, the first information indicating the MDT configuration corresponding to the terminal device, so that the second network device obtains, by using the first information, the MDT configuration via the first network device previously connected to the terminal device, and delivers the MDT configuration to the terminal device, thereby maintaining MDT continuity.

## Description

This application claims priority to Chinese Patent Application No. 202311008107.6, filed with the China National Intellectual Property Administration on August 10, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In the field of mobile communication, a mobile communication network may be monitored through minimization of drive-test (minimization of drive-test, MDT). MDT is to find problems such as weak coverage, coverage holes, and overshoot coverage in the mobile communication network by using a measurement report that is reported by a terminal device and that carries location information, to optimize the mobile communication network.

In some scenarios, for example, in an artificial intelligence (artificial intelligence, AI) model training process, the terminal device is expected to perform continuous MDT, so that a network device can obtain continuous MDT data, to improve a network optimization effect.

However, if a radio resource control (radio resource control, RRC) state of the terminal device changes, the terminal device may not be able to continuously perform MDT measurement.

### SUMMARY

Embodiments of this application provide a communication method and apparatus, so that a terminal device can maintain MDT continuity. To achieve the foregoing objective, the following technical solutions are used in embodiments of this application.

According to a first aspect, an embodiment of this application provides a communication method. The method may be performed by a terminal device, or may be performed by a module (for example, a processor, a chip, or a chip system) used in the terminal device, or may be implemented by a logical node, a logical module, or software that can implement all or a part of functions of the terminal device. The method includes: receiving first information from a first network device; sending the first information to a second network device; receiving a second MDT configuration from the second network device; and performing MDT measurement based on the second MDT configuration. The first information indicates a first MDT configuration, and the first MDT configuration includes an MDT configuration corresponding to a terminal device. The second MDT configuration is obtained based on the first MDT configuration.

It can be learned that, in the method provided in this embodiment of this application, after the terminal device enters a connected (connected) state from an idle (idle) state, the terminal device may send, to the newly connected second network device, the first information indicating the MDT configuration corresponding to the terminal device, so that the second network device obtains, by using the first information, the MDT configuration via the first network device previously connected to the terminal device, and delivers the MDT configuration to the terminal device. This avoids a case that the terminal device stops MDT measurement because the newly connected network device does not send the second MDT configuration to the terminal device, thereby maintaining MDT continuity, to obtain continuous MDT data, so as to meet a requirement for obtaining continuous MDT data in some scenarios. For example, the network device obtains the continuous MDT data for AI model training, to improve AI model training accuracy and improve an effect of applying an AI model.

In a possible implementation, the first information may be stored before the terminal device disconnects from the first network device. In this way, after the terminal device disconnects from the first network device, MDT interruption caused by a failure of the terminal device to send the first information to the second network device due to release of the first information is avoided.

In a possible implementation, the first information may be sent to the second network device after a connection to the second network device is established, so that the terminal device can obtain the second MDT configuration from the second network device, to maintain continuity of the MDT measurement.

In a possible implementation, the second MDT configuration may include an immediate minimization of drive-test (Immediate MDT) configuration.

For example, the terminal device may implement measurement of information or parameters such as a data amount of the terminal device, an internet protocol (internet protocol, IP) throughput, a packet transmission delay, a packet loss rate, and a processing delay by using the immediate MDT configuration in the second MDT configuration.

In a possible implementation, the first information may include an index of the first MDT configuration.

It may be understood that the first network device may store MDT configurations corresponding to a plurality of terminal devices. The index of the first MDT configuration helps the first network device determine, from the MDT configurations corresponding to the plurality of terminal devices, the MDT configuration corresponding to the terminal device.

In a possible implementation, indexes of a plurality of MDT configurations may be stored in the second network device in an index list. The second network device may search the index list for an index corresponding to the terminal device, and then send the first information to the first network device, to indicate that the MDT configuration of the terminal device, that is, the first MDT configuration, needs to be obtained.

In a possible implementation, second information from the first network device may be further received, and the second information is sent to the second network device. The second information indicates first MDT data, and the first MDT data is obtained through measurement based on the first MDT configuration.

It should be noted that, in some scenarios, the network device needs to obtain continuous MDT data, for example, train an AI model by using the continuous MDT data. In this case, the terminal device may send, to the newly connected second network device, the second information indicating the first MDT data obtained through measurement by using the first MDT configuration, so that the second network device obtains, by using the second information, the first MDT data via the first network device previously connected to the terminal device, and trains the AI model by using the first MDT data. This can improve prediction accuracy of the model on data (for example, a future throughput and trajectory information of the terminal), to improve a network optimization effect.

In a possible implementation, the second information may include an index of the first MDT data.

It may be understood that, the first network device may store a plurality of pieces of MDT data. The index of the first MDT data helps the first network device determine the first MDT data from the plurality of pieces of MDT data.

In a possible implementation, indexes of the plurality of pieces of MDT data may be stored in the second network device in an index list. The second network device may search the index list for an index corresponding to the terminal device, and then send the second information to the first network device, to indicate that MDT data corresponding to the terminal device, that is, the first MDT data, needs to be obtained.

According to a second aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: receiving first information from a second network device, where the first information indicates a first MDT configuration, and the first MDT configuration includes an MDT configuration corresponding to a terminal device; and sending the first MDT configuration to the second network device.

For beneficial effects that can be achieved by the method provided in the second aspect, refer to the beneficial effects of the method provided in the first aspect. Details are not described herein again.

In a possible implementation, the first information may be sent to the terminal device.

In a possible implementation, third information may be received from a core network device or an operation, administration, and maintenance (Operation, Administration, and Maintenance, OAM), where the third information indicates to store the first MDT configuration.

In a possible implementation, the third information may include an identifier of the terminal device and an index of the first MDT configuration.

In a possible implementation, the third information may further include retention duration of the first MDT configuration and/or an index range of the first MDT configuration.

In a possible implementation, second information may be received from the second network device, where the second information indicates first MDT data, and the first MDT data is obtained through measurement based on the first MDT configuration; and the first MDT data is sent to the second network device.

In a possible implementation, the second information may be sent to the terminal device, where the second information indicates the first MDT data, and the first MDT data is obtained through measurement based on the first MDT configuration.

In a possible implementation, fourth information may be received from the core network device or the OAM, where the fourth information indicates to store the first MDT data, and the first MDT data is obtained through measurement based on the first MDT configuration.

In a possible implementation, the fourth information may include the identifier of the terminal device and an index of the first MDT data.

In a possible implementation, the fourth information may further include retention duration of the first MDT data and/or an index range of the first MDT data.

According to a third aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: sending first information to a first network device, where the first information indicates a first MDT configuration, and the first MDT configuration includes an MDT configuration corresponding to a terminal device; receiving the first MDT configuration from the first network device; determining a second MDT configuration based on the first MDT configuration; and sending the second MDT configuration to the terminal device.

For beneficial effects that can be achieved by the method provided in the third aspect, refer to the beneficial effects of the method provided in the first aspect. Details are not described herein again.

In a possible implementation, the first information may be received from the terminal device.

In a possible implementation, second information may be sent to the first network device, where the second information indicates first MDT data, and the first MDT data is obtained through measurement based on the first MDT configuration; and the first MDT data from the first network device is received.

In a possible implementation, the second information may be received from the terminal device, where the second information indicates the first MDT data, and the first MDT data is obtained through measurement based on the first MDT configuration.

According to a fourth aspect, an embodiment of this application provides a communication method. The method may be performed by a terminal device, or may be performed by a module (for example, a processor, a chip, or a chip system) used in the terminal device, or may be implemented by a logical node, a logical module, or software that can implement all or a part of functions of the terminal device. The method includes: receiving a first MDT configuration from a first network device, where the first MDT configuration includes an MDT configuration corresponding to a terminal device; sending the first MDT configuration to a second network device; receiving a second MDT configuration from the second network device, where the second MDT configuration is obtained based on the first MDT configuration; and performing MDT measurement based on the second MDT configuration.

It can be learned that, in the method provided in this embodiment of this application, after the terminal device enters a connected state from an idle state, the terminal device may send, to the newly connected second network device, the first MDT configuration including the MDT configuration corresponding to the terminal device, so that the second network device delivers the MDT configuration to the terminal device by using the first MDT configuration. This avoids a case that the terminal device stops MDT measurement because the newly connected network device does not send the second MDT configuration to the terminal device, thereby maintaining MDT continuity, to obtain continuous MDT data, so as to meet a requirement for obtaining continuous MDT data in some scenarios. For example, the network device obtains the continuous MDT data for AI model training, to improve AI model training accuracy and improve an effect of applying an AI model.

In a possible implementation, the first MDT configuration may be stored before the terminal device disconnects from the first network device.

It may be understood that, the terminal device may release some information that is not stored after disconnecting from the first network device. To avoid a case that the first MDT configuration is released, the terminal device may store the first MDT configuration before disconnecting from the first network device (that is, before entering the idle state), to obtain the continuous MDT data, to meet a requirement for obtaining continuous MDT data in some scenarios.

In a possible implementation, the first MDT configuration may be sent to the second network device after a connection to the second network device is established.

It may be understood that, when the terminal establishes the connection to the second network device, it indicates that the terminal device enters the connected state. In this case, the terminal device needs to obtain the MDT configuration from the second network device to maintain MDT continuity. Therefore, the terminal needs to send the first MDT configuration to the second network device after establishing the connection to the second network device, so that the second network device delivers the MDT configuration to the terminal device.

In a possible implementation, fifth information may be received from the first network device, where the fifth information indicates to store the first MDT configuration.

It can be learned that, the terminal device may receive the fifth information from the first network device, to store the first MDT configuration based on an indication of the fifth information. This avoids MDT interruption caused by a failure of the terminal device to send the first MDT configuration to the second network device because the terminal device does not store the first MDT configuration.

In a possible implementation, first MDT data may be received from the first network device, where the first MDT data is obtained through measurement based on the first MDT configuration; and the first MDT data is sent to the second network device.

It should be noted that, in some scenarios, the network device needs to obtain continuous MDT data, for example, train an AI model by using the continuous MDT data. In this case, the terminal device may send, to the newly connected second network device, the second information indicating the first MDT data obtained through measurement by using the first MDT configuration, so that the second network device obtains, by using the second information, the first MDT data via the first network device previously connected to the terminal device, and trains the AI model by using the first MDT data. This can improve prediction accuracy of the model on data (for example, a future throughput and trajectory information of the terminal), to improve a network optimization effect.

In a possible implementation, sixth information may be received from the first network device, where the sixth information indicates to store the first MDT data, and the first MDT data is obtained through measurement based on the first MDT configuration.

It can be learned that, the terminal device may receive the sixth information from the first network device, to store the first MDT data based on an indication of the sixth information. This avoids a failure of the second network device to train the AI model by using the first MDT data caused by a failure of the terminal device to send the first MDT data to the second network device because the terminal device does not store the first MDT data.

According to a fifth aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: receiving a first MDT configuration from a core network device or an OAM, where the first MDT configuration includes an MDT configuration corresponding to a terminal device; and sending the first MDT configuration to the terminal device.

For beneficial effects that can be achieved by the method provided in the fifth aspect, refer to the beneficial effects of the method provided in the fourth aspect. Details are not described herein again.

In a possible implementation, fifth information may be sent to the terminal device, where the fifth information indicates to store the first MDT configuration.

In a possible implementation, first MDT data may be sent to the terminal device, where the first MDT data is obtained through measurement based on the first MDT configuration.

In a possible implementation, sixth information may be sent to the terminal device, where the sixth information indicates to store the first MDT data, and the first MDT data is obtained through measurement based on the first MDT configuration.

According to a sixth aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: receiving a first MDT configuration from a terminal device, where the first MDT configuration includes an MDT configuration corresponding to the terminal device; determining a second MDT configuration based on the first MDT configuration; and sending the second MDT configuration to the terminal device.

For beneficial effects that can be achieved by the method provided in the sixth aspect, refer to the beneficial effects of the method provided in the fourth aspect. Details are not described herein again.

In a possible implementation, first MDT data may be received from the terminal device, where the first MDT data is obtained through measurement based on the first MDT configuration.

According to a seventh aspect, an embodiment of this application provides a communication method. The method may be performed by a terminal device, or may be performed by a module (for example, a processor, a chip, or a chip system) used in the terminal device, or may be implemented by a logical node, a logical module, or software that can implement all or a part of functions of the terminal device. The method includes: receiving a fourth MDT configuration from a first network device, sending first indication information to a second network device, receiving a fifth MDT configuration from the second network device, and performing MDT measurement based on the fifth MDT configuration. The fourth MDT configuration is obtained based on a third MDT configuration. The third MDT configuration is a management based MDT (management based MDT) configuration. The third MDT configuration includes an MDT activation type, an immediate MDT configuration, a logged MDT configuration, and trace session (Trace Reference, TR) information. The TR information indicates a first TR and a second TR, where the first TR is a TR of the immediate MDT configuration, and the second TR is a TR of the logged MDT configuration. The first TR is the same as the second TR.

It can be learned that, in the method provided in this embodiment of this application, after the terminal device enters a connected state from an idle state, the terminal device may send the first indication information to the newly connected second network device, so that the second network device obtains the MDT configuration from a core network device by using the first indication information, and delivers the MDT configuration to the terminal device. This avoids a case that the terminal device stops the MDT measurement because the newly connected network device does not send the fifth MDT configuration to the terminal device, thereby maintaining MDT continuity, to obtain continuous MDT data, so as to meet a requirement for obtaining continuous MDT data in some scenarios. For example, the network device obtains the continuous MDT data for AI model training, to improve AI model training accuracy and improve an effect of applying an AI model.

In a possible implementation, the MDT activation type included in the third MDT configuration indicates the terminal device to perform immediate MDT measurement and logged MDT measurement.

In a possible implementation, a target trace recording session reference (Trace Recording Session Reference, TRSR) identifier may be further received from the first network device, where the first indication information may include the target TRSR identifier and/or an identifier of the terminal device. The target TRSR identifier is a TRSR identifier allocated by the first network device to the terminal device. The terminal device corresponding to the MDT data may be identified by using the TRSR identifier.

It can be learned that, in the method provided in this embodiment of this application, a new MDT activation type "immediate MDT and logged MDT" is introduced, so that an OAM can send the immediate MDT configuration and the logged MDT configuration that have the same TR, and associate immediate MDT data and logged MDT data of the same terminal device by using the TR and the target TRSR identifier. This avoids a problem of a failure of obtaining continuous MDT data of the same terminal device because the immediate MDT data and the logged MDT data of the same terminal device cannot be associated due to a difference between the TR of the immediate MDT configuration and the TR of the logged MDT configuration of the same terminal device. Therefore, a requirement for obtaining continuous MDT data in some scenarios is met.

In a possible implementation, second indication information may be further sent to the second network device. The second indication information indicates that a logged MDT measurement report is stored in the terminal device. The second indication information may be used to notify that the logged MDT measurement report is stored in the terminal device, so that the second network device obtains the logged MDT measurement report from the terminal device when the logged MDT measurement report is required.

In a possible implementation, the first indication information and the second indication information may be same information. Transmitting the first indication information and the second indication information by using same information helps reduce signaling overheads.

According to an eighth aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: receiving a third MDT configuration sent by an OAM, determining a fourth MDT configuration based on the third MDT configuration, sending the fourth MDT configuration to a terminal device, and sending the fourth MDT configuration to a core network device. The third MDT configuration is a management based MDT configuration. The third MDT configuration includes an MDT activation type, an immediate MDT configuration, a logged MDT configuration, and TR information. The TR information indicates a first TR and a second TR, where the first TR is a TR of the immediate MDT configuration, and the second TR is a TR of the logged MDT configuration. The first TR is the same as the second TR. The fourth MDT configuration is an MDT configuration corresponding to the terminal device.

For beneficial effects that can be achieved by the method provided in the eighth aspect, refer to the beneficial effects of the method provided in the seventh aspect. Details are not described herein again.

In a possible implementation, the MDT activation type included in the third MDT configuration indicates the terminal device to perform immediate MDT measurement and logged MDT measurement.

In a possible implementation, the fourth MDT configuration and a target TRSR identifier may be sent to the core network device. The target TRSR identifier is a TRSR identifier allocated by a first network device to the terminal device.

In a possible implementation, the first TR and the second TR may be indicated by using a same TR.

In another possible implementation, the first TR and the second TR may be indicated by using two same TRs.

In a possible implementation, the third MDT configuration may further include an MDT area scope.

In a possible implementation, the fourth MDT configuration may further include an identifier of the terminal device.

In a possible implementation, the target TRSR identifier may be further sent to the terminal device.

According to a ninth aspect, an embodiment of this application provides a communication method. The method may be performed by a network device, or may be performed by a module (for example, a processor, a chip, or a chip system) used in the network device, or may be implemented by a logical node, a logical module, or software that can implement all or a part of functions of the network device. The method includes: receiving first indication information from a terminal device; sending the first indication information to a core network device; receiving a third MDT configuration sent by the core network device; determining a fifth MDT configuration based on the third MDT configuration; and sending the fifth MDT configuration to the terminal device. The first indication information indicates the third MDT configuration stored in the core network device. The first indication information includes an identifier of the terminal device. The third MDT configuration includes an MDT configuration corresponding to the terminal device.

For beneficial effects that can be achieved by the method provided in the ninth aspect, refer to the beneficial effects of the method provided in the seventh aspect. Details are not described herein again.

In a possible implementation, the third MDT configuration and a target TRSR identifier that are sent by the core network device may be received.

In a possible implementation, the first indication information indicates the third MDT configuration and the target TRSR identifier that are stored in the core network device, where the first indication information includes the target TRSR identifier and/or the identifier of the terminal device.

In a possible implementation, second indication information sent by the terminal device may be further received. The second indication information indicates that a logged MDT measurement report is stored in the terminal device.

In a possible implementation, first response information may be further sent to the terminal device, and the logged MDT measurement report sent by the terminal device is received. The first response information is used to request the logged MDT measurement report.

In a possible implementation, the logged MDT measurement report may be further sent to a trace collection entity (trace collection entity, TCE).

In a possible implementation, TR information and/or an MDT activation type may be further sent to the core network device.

In a possible implementation, an immediate MDT measurement report and the logged MDT measurement report of the terminal device may be associated by using the target TRSR identifier and the TR information.

In a possible implementation, the fifth MDT configuration may be the same as a fourth MDT configuration.

According to a tenth aspect, an embodiment of this application provides a communication apparatus. The apparatus may be a terminal device, or may be a module (for example, a processor, a chip, or a chip system) used in the terminal device, or may be a logical node, a logical module, or software that can implement all or a part of functions of the terminal device. The apparatus may be configured to perform the method according to any one of the possible implementations of the first aspect, the fourth aspect, or the seventh aspect.

For example, the apparatus includes a module or a unit configured to perform the method according to any one of the possible implementations of the first aspect or the fourth aspect.

According to an eleventh aspect, an embodiment of this application provides a communication apparatus. The apparatus may be a network device, or may be a module (for example, a processor, a chip, or a chip system) used in the network device, or may be a logical node, a logical module, or software that can implement all or a part of functions of the network device. The apparatus may be configured to perform the method according to any one of the possible implementations of the second aspect, the third aspect, the fifth aspect, the sixth aspect, the eighth aspect, or the ninth aspect.

For example, the apparatus includes a module or a unit configured to perform the method according to any one of the possible implementations of the second aspect, the third aspect, the fifth aspect, or the sixth aspect.

According to a twelfth aspect, an embodiment of this application further provides a communication apparatus. The apparatus may be a terminal device, or may be a module (for example, a processor, a chip, or a chip system) used in the terminal device, or may be a logical node, a logical module, or software that can implement all or a part of functions of the terminal device. The communication apparatus includes at least one processor. When the at least one processor executes program code or instructions, the method according to any one of the possible implementations of the first aspect, the fourth aspect, or the seventh aspect is implemented.

Optionally, the communication apparatus may further include at least one memory, and the at least one memory is configured to store the program code or the instructions.

According to a thirteenth aspect, an embodiment of this application further provides another communication apparatus. The apparatus may be a network device, or may be a module (for example, a processor, a chip, or a chip system) used in the network device, or may be a logical node, a logical module, or software that can implement all or a part of functions of a terminal device. The communication apparatus includes at least one processor. When the at least one processor executes program code or instructions, the method according to any one of the possible implementations of the second aspect, the third aspect, the fifth aspect, the sixth aspect, the eighth aspect, or the ninth aspect is implemented.

Optionally, the communication apparatus may further include at least one memory, and the at least one memory is configured to store the program code or the instructions.

According to a fourteenth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the foregoing aspects.

Optionally, the chip may be an integrated circuit.

According to a fifteenth aspect, an embodiment of this application further provides a computer-readable storage medium, configured to store a computer program. The computer program is used to implement the method according to any one of the foregoing aspects.

According to a sixteenth aspect, an embodiment of this application further provides a computer program product including instructions. When the computer program product runs on a computer, the computer is enabled to implement the method according to any one of the foregoing aspects.

The communication apparatus, the computer storage medium, the computer program product, and the chip provided in embodiments are all configured to perform the method provided above. Therefore, for beneficial effects that can be achieved by the communication apparatus, the computer storage medium, the computer program product, and the chip, refer to the beneficial effects of the method provided above. Details are not described herein again.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely a part of embodiments of this application, and a person of ordinary skill in the art may still derive other accompanying drawings from these accompanying drawings without creative efforts.
FIG. 1 is a diagram of a structure of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of still another communication apparatus according to an embodiment of this application;
FIG. 10 is a diagram of a structure of still another communication apparatus according to an embodiment of this application;
FIG. 11 is a diagram of a structure of still another communication apparatus according to an embodiment of this application;
FIG. 12 is a diagram of a structure of still another communication apparatus according to an embodiment of this application;
FIG. 13 is a diagram of a structure of still another communication apparatus according to an embodiment of this application;
FIG. 14 is a diagram of a structure of still another communication apparatus according to an embodiment of this application;
FIG. 15 is a diagram of a structure of still another communication apparatus according to an embodiment of this application;
FIG. 16 is a diagram of a structure of a chip according to an embodiment of this application; and
FIG. 17 is a diagram of a structure of another communication apparatus according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely a part but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular sequence of the objects.

In addition, the terms "include", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, a term like "example" or "for example" represents giving an example, an illustration, or a description. Any embodiment or design solution described as "example" or "for example" in embodiments of this application should not be explained as being more preferred or having more advantages than another embodiment or design solution. Exactly, use of the term "example", "for example", or the like is intended to present a related concept in a specific manner.

MDT is a technology used to monitor mobile communication networks for network optimization. In some scenarios, for example, in an AI model training process, a terminal device is expected to perform continuous MDT, so that a network device can obtain continuous MDT data, to improve a network optimization effect. However, if an RRC state of the terminal device changes, the terminal device may not be able to continuously perform MDT measurement. Specifically, the terminal device in a connected state may perform measurement based on an MDT configuration sent by the network device. When the terminal device switches from the connected state to an idle state, the terminal device disconnects from the network device and releases the MDT configuration. If the terminal device switches from the idle state to the connected state again and then establishes a connection to a new network device, the terminal device may stop performing MDT measurement because the network device newly connected to the terminal device does not send an MDT configuration to the terminal device. In this application, an RRC state change of the terminal device may also be referred to as a cross-connected state of the terminal device, for example, including a scenario in which the terminal device enters the connected state again after entering the idle state from the connected state.

Therefore, embodiments of this application provide a communication method, so that a terminal device can maintain MDT continuity.

Technical solutions provided in embodiments of this application may be applied to various communication systems. The technical solutions provided in embodiments of this application may be applied to a 5th generation mobile communication technology (5th Generation Mobile Communication Technology, 5G) communication system, a future evolved system, a plurality of converged communication systems, or the like, or may be applied to an existing communication system or the like. Application scenarios of the technical solutions provided in embodiments of this application may include a plurality of scenarios, for example, machine-to-machine (machine-to-machine, M2M), macro-micro communication, enhanced mobile broadband (enhanced mobile broadband, eMBB), ultra-reliable and low-latency communication (ultra-reliable and low-latency communication, uRLLC), and massive machine-type communications (massive machine-type communications, mMTC). These scenarios may include but are not limited to a scenario of communication between terminal devices, a scenario of communication between network devices, a scenario of communication between a network device and a terminal device, and the like. An example in which the technical solutions are applied to the scenario of communication between the network device and the terminal device is used below for description.

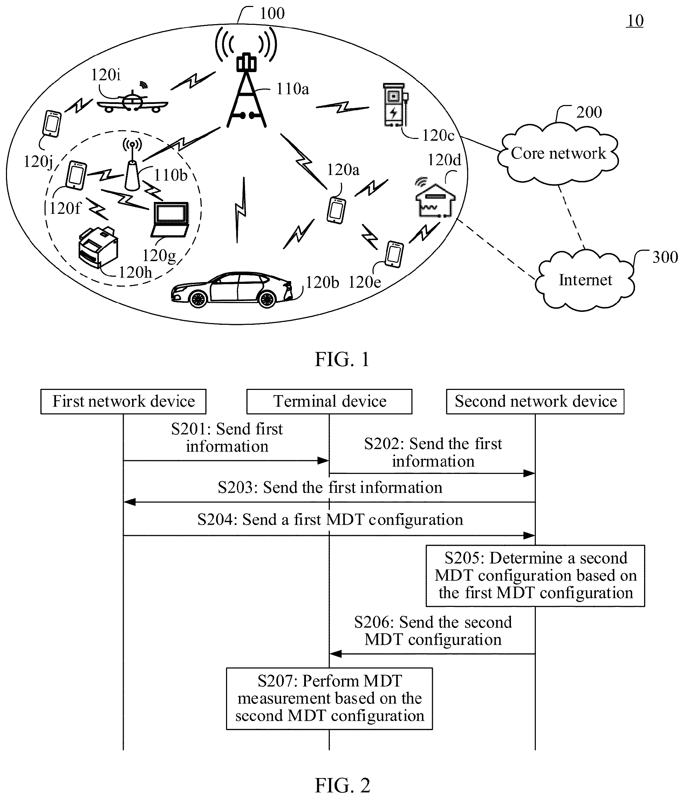

FIG. 1 is a possible and non-limitative diagram of the foregoing communication system. As shown in FIG. 1, the communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Sometimes, the RAN node 110 and the terminal device 120 are both referred to as communication apparatuses. For example, the network elements 110a and 110b in FIG. 1 may be understood as communication apparatuses having a base station function, and the network elements 120a to 120j may be understood as communication apparatuses having a terminal device function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehiclemounted device, or the like. For example, an access network device in a vehicle-to-everything (vehicle-to-everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). The RAN node in embodiments of this application may alternatively be a logical node, a logical module, or software that can implement all or a part of functions of the RAN node.

The RAN node may also have a different expression, for example, a network device. In embodiments of this application, unless otherwise specified, the network device is used for expression subsequently.

In another possible scenario, a plurality of RAN nodes coordinate to assist the terminal device in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in embodiments of this application. Any one of the CU (or the CU-CP or the CU-UP), the DU, and the RU in embodiments of this application may be implemented by using a software module, a hardware module, or a combination of a software module and a hardware module.

The terminal device may also be referred to as a terminal, user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal device is not limited in embodiments of this application.

The core network 200 may include one or more core network elements. Using a 5G core network as an example, the 5G core network includes an access and mobility management function (access and mobility management function, AMF) network element responsible for services such as mobility management and access management, a session management function (session management function, SMF) network element responsible for session management, a user plane function (user plane function, UPF) network element responsible for data packet routing and forwarding and quality of service (quality of service, QoS) control on a user plane, a policy control function (policy control function, PCF) network element, and the like. The core network elements may operate independently, or may be combined together to implement some control functions. For example, the AMF, the SMF, and the PCF may be combined together to serve as a core network device.

In a possible implementation, the communication system may further include operation, administration, and maintenance (operation, administration, and maintenance, OAM). The OAM may include fault detection, path discovery, fault positioning, performance monitoring, and the like. A node in an OAM domain in a communication network may perform OAM. The OAM domain is a set of all nodes that support an OAM function in the communication network.

It may be understood that, in this application, an example in which the network device and the terminal device are used as execution bodies of interaction illustration is used for illustration. However, the execution body of the interaction illustration is not limited in this application. For example, the network device in the method in this application may alternatively be a chip, a chip system, or a processor used in the network device, or may be a logical node, a logical module, or software that can implement all or a part of functions of the network device. The terminal device in the method in this application may alternatively be a chip, a chip system, or a processor used in the terminal device, or may be a logical node, a logical module, or software that can implement all or a part of functions of the terminal device.

FIG. 2 shows a communication method according to an embodiment of this application. As shown in FIG. 2, the method includes the following steps.

S201: A first network device sends first information to a terminal device.

Correspondingly, the terminal device receives the first information from the first network device.

The first information indicates a first MDT configuration, and the first MDT configuration includes an MDT configuration corresponding to the terminal device.

The terminal device may perform MDT measurement by using the corresponding MDT configuration. For example, the terminal may measure information or parameters such as a downlink semaphore of a serving cell and an intra-frequency/inter-frequency/inter-RAT neighboring cell, a packet data convergence protocol (packet data convergence protocol, PDCP) service data unit (service data unit, SDU) data amount, an average UE throughput, and a data packet delay by using the corresponding MDT configuration.

For example, in a scenario in which the terminal device needs to continuously perform MDT measurement, for example, in a scenario in which the network device needs continuous MDT data for AI model training, the first network device may send the first information to the terminal device by using an RRC reconfiguration (RRC reconfiguration) message, a UE information request (UE information request) message, or other signaling.

It may be understood that, in this embodiment of this application, "sending information to ... (for example, a terminal device)" or a related description in the accompanying drawings may be understood as that a destination end of the information is the terminal device, and may include directly or indirectly sending the information to the terminal device; and "receiving information of ... (for example, a terminal device)", "receiving information from ... (a terminal device)", or a related description in the accompanying drawings may be understood as that a source end of the information is the terminal device, and may include directly or indirectly receiving the information from the terminal device. Information may undergo necessary processing, for example, a format change, between a source end and a destination end for sending of the information, but the destination end may understand valid information from the source end. A similar expression in embodiments of this application may be understood similarly, and details are not described herein.

In a possible implementation, the first MDT configuration may include an MDT activation type, an immediate minimization of drive-test (Immediate MDT) configuration, and a logged MDT (logged MDT) configuration.

For example, the immediate MDT configuration may include one or more of a downlink semaphore measurement configuration of a serving cell and an intra-frequency/inter-frequency/inter-RAT neighboring cell, a PDCP SDU data amount measurement configuration, an average UE throughput measurement configuration, a data packet delay measurement configuration, and a packet loss rate measurement configuration.

The logged MDT configuration may include a measurement configuration of received signal strength of the terminal device.

The MDT activation type is an MDT measurement manner that can be used by the terminal device. For example, the manner may include: using immediate MDT only (Immediate MDT only), using logged MDT only (Logged MDT only), or using immediate MDT and trace (Immediate MDT and Trace).

In a possible implementation, the first MDT configuration may further include one or more of an MDT area scope, a signaling based MDT public land mobile network list (Signaling based MDT public land mobile network List, Signaling based MDT PLMN List), an identifier of the first network device, and an identifier of the terminal device.

The MDT area scope indicates an area in which MDT data collection should be performed, and may be a cell list, a tracking area list, or a tracking area identifier list.

The signaling based MDT PLMN list indicates an allowed PLMN list supported by a signaling based MDT mechanism.

In a possible implementation, the first information may include an index of the first MDT configuration.

For example, the index of the first MDT configuration may be a next generation radio access network trace identifier (next generation radio access network Trace identifier, NG-RAN Trace ID), indicating the first network device to retrieve a required MDT configuration (that is, the first MDT configuration) of the terminal device from MDT configurations that are of a plurality of terminal devices and that are stored in the first network device.

For example, the index of the first MDT configuration may alternatively be the identifier of the terminal device. For example, if the network device stores only one MDT configuration for each terminal device, the identifier of the terminal device may be reused for the index of the first MDT.

For example, the identifier of the terminal device may be a cell-radio network temporary identifier (cell-radio network temporary identifier, CRNTI), a CRNTI and time information, or a system architecture evolution temporary mobile station identifier (system architecture evolution temporary mobile station identifier, STMSI).

In a possible implementation, the first network device may further send second information to the terminal device.

For example, the terminal device receives the second information from the first network device.

The second information indicates first MDT data, and the first MDT data is obtained through measurement based on the first MDT configuration.

For example, in a scenario in which historical MDT data needs to be obtained, for example, in a scenario in which the network device needs the historical MDT data for AI model training, the first network device may send the second information to the terminal device by using an RRCReconfiguration message, a UE information request message, or other signaling.

It may be understood that, training the AI model by using the historical MDT data (data such as a historical throughput and trajectory data) helps improve inference accuracy of the AI model for a future throughput and trajectory information of the terminal device.

In a possible implementation, the first MDT data includes MDT data obtained by the terminal device through measurement based on the first MDT configuration. For example, the terminal device obtains, through measurement based on the first MDT configuration, any one or more of the following MDT data: a downlink semaphore measurement result of a serving cell and an intra-frequency/inter-frequency/inter-RAT neighboring cell, a PDCP SDU data amount, an average UE throughput, and a data packet delay. The MDT data may also be considered as an MDT measurement result.

In another possible implementation, the first MDT data includes MDT data obtained by the network device through measurement based on the first MDT configuration.

In still another possible implementation, the first MDT data includes MDT data obtained by the network device and the terminal device through measurement based on the first MDT configuration.

In a possible implementation, the second information includes an index of the first MDT data.

The index of the first MDT data indicates the first network device to retrieve required MDT data (that is, the first MDT data) from MDT data that is of a plurality of terminal devices and that is stored in the first network device.

For example, the index of the first MDT data may be an NG-RAN trace ID.

For example, the index of the first MDT data may alternatively be the identifier of the terminal device. For example, if the network device stores only one piece of MDT data for each terminal device, the identifier of the terminal device may be reused for the first MDT data.

In a possible implementation, the first network device may alternatively store the first MDT configuration when disconnecting from the terminal device until storage of the first MDT configuration times out. That the storage of the first MDT configuration times out means that storage time of the first MDT configuration is greater than retention duration of the first MDT configuration. The retention duration of the first MDT configuration may be preset, or may be indicated by third information. The third information indicates to store the first MDT configuration.

For example, the first network device may store the first MDT configuration when disconnecting from the terminal device until storage of the first MDT configuration times out. Therefore, the stored first MDT configuration may be used by the terminal device to perform MDT measurement, to obtain continuous MDT data, for example, in a scenario in which the network device requires the terminal device to continuously perform MDT measurement.

For another example, the first network device may store the first MDT configuration when disconnecting from the terminal device based on an indication of the third information until storage of the first MDT configuration times out.

In a possible implementation, the first network device may further receive the third information.

For example, the first network device may receive the third information from an OAM.

For another example, the first network device may receive an MDT configuration that is from a core network device and that carries the third information, to obtain the third information.

For another example, the first network device may receive, via a core network device, an MDT configuration that is sent by an OAM and carries the third information, to obtain the third information.

In a possible implementation, the third information may include the identifier of the terminal device and the index of the first MDT configuration.

For example, the identifier of the terminal device may be included in an identifier list. The identifier list may indicate one or more terminal devices that retain MDT configurations (that is, indicate MDT configurations corresponding to which terminal devices are retained).

In a possible implementation, the third information may further include the retention duration of the first MDT configuration and/or an index range of the first MDT configuration.

The index range of the first MDT configuration indicates a sending range of the first MDT configuration (that is, indicates which MDT configurations that may be sent by the network device to the terminal device).

For example, the index range of the first MDT configuration may be a next generation radio access network trace identifier list (NG-RAN Trace ID List). Each NG-RAN trace ID in the NG-RAN trace ID list may correspond to one MDT configuration.

It may be understood that, after disconnecting from the terminal device, the first network device releases some configurations (for example, the first MDT configuration) related to the terminal device. To avoid a case that the first MDT configuration is released because the first MDT configuration is not stored, the OAM may indicate, by using the third information, the first network device to store the first MDT configuration. In this way, MDT interruption caused by a failure of the first network device to send the first MDT configuration to a second network device due to the release of the first MDT configuration is avoided.

In a possible implementation, the first network device may alternatively store the first MDT data when disconnecting from the terminal device until storage of the first MDT data times out.

For example, the first network device may store the first MDT data when disconnecting from the terminal device until storage of the first MDT data times out. That the storage of the first MDT data times out means that storage time of the first MDT data is greater than retention duration of the first MDT data. The retention duration of the first MDT data may be preset, or may be indicated by fourth information. The fourth information indicates to store the first MDT data.

For another example, the first network device may store the first MDT data when disconnecting from the terminal device based on an indication of the fourth information until storage of the first MDT data times out. Therefore, the stored first MDT data may be sent to another network device, for example, used in a scenario in which the network device trains the AI model based on the historical MDT data.

In a possible implementation, the first network device may receive the fourth information.

For example, the first network device may receive an MDT configuration that is from an OAM and that carries the fourth information, to obtain the fourth information.

For example, the first network device may receive an MDT configuration that is from a core network device and that carries the fourth information, to obtain the fourth information.

For example, the first network device may receive, via a core network device, the fourth information sent by an OAM.

In a possible implementation, the fourth information may include the identifier of the terminal device and the index of the first MDT data.

In a possible implementation, the fourth information may further include the retention duration of the first MDT data and/or an index range of the first MDT data.

The index range of the first MDT data indicates a sending range of the first MDT data (that is, indicates which MDT data that may be sent by the network device to the terminal device).

For example, the index range of the first MDT data may be an NG-RAN trace ID List. Each NG-RAN trace ID in the NG-RAN trace ID list may correspond to one piece of MDT data.

It may be understood that, to avoid a case that the first MDT data is released because the first MDT data is not stored, the OAM may indicate, by using the fourth information, the first network device to store the first MDT data. In this way, a failure of the first network device to send the first MDT data to the second network device due to the release of the first MDT data is avoided, so that the second network device can train the AI model by using the first MDT data.

In a possible implementation, the terminal device may alternatively store the first information before disconnecting from the first network device.

For example, when in a connected state, the terminal device may maintain a connection to the first network device. Before the terminal device disconnects from the first network device, that is, before the terminal device switches from the connected state to an idle state, the terminal device may store the first information until the first information is sent to the second network device.

S202: The terminal device sends the first information to the second network device.

Correspondingly, the second network device receives the first information from the terminal device.

For example, the terminal device may send the first information to the second network device by using a measurement report (measurement report, MR), a UE information response (UE information response) message, or other signaling.

In a possible implementation, the terminal device may send the first information to the second network device after establishing a connection to the second network device.

For example, when switching from the connected state to the idle state and disconnecting from the first network device, the terminal device may switch from the idle state to the connected state again, and after establishing an RRC connection to the second network device, send the first information to the second network device by using a measurement report, a UE information response message, or other signaling.

In a possible implementation, the terminal device may further send the second information to the second network device.

For example, the terminal device may send the first information to the second network device by using a measurement report, a UE information response message, or other signaling.

In a possible implementation, the terminal device may send the second information to the second network device after establishing a connection to the second network device.

For example, when switching from the connected state to the idle state and disconnecting from the first network device, the terminal device may switch from the idle state to the connected state again, and after establishing an RRC connection to the second network device, send the second information to the second network device by using a measurement report, a UE information response message, or other signaling.

In a possible implementation, the second network device and the first network device may be a same network device.

It should be noted that, if the first network device and the second network device are a same network device, steps S203 and S204 may not be performed.

S203: The second network device sends the first information to the first network device.

Correspondingly, the first network device receives the first information from the second network device.

For example, in a scenario in which the terminal device needs to continuously perform MDT measurement, the second network device may send the first information to the first network device by using a retrieve UE context request (retrieve UE context request) message, a handover request acknowledgement (handover request acknowledgement) message, a UE context release (UE context release) message, or other signaling.

In a possible implementation, indexes of a plurality of MDT configurations may be stored in the second network device in an index list. The second network device may search the index list for an index corresponding to the terminal device to determine the first information, and then send the first information to the first network device, to indicate that the MDT configuration of the terminal device, that is, the first MDT configuration, needs to be obtained.

In a possible implementation, the first network device may further send the second information to the second network device.

Correspondingly, the first network device receives the second information from the second network device.

For example, in a scenario in which the historical MDT data needs to be obtained, the second network device may send the second information to the first network device by using a retrieve UE context request message, a handover request acknowledgement message, a UE context release message, or other signaling.

In a possible implementation, indexes of a plurality of pieces of MDT data may be stored in the second network device in an index list. The second network device may search the index list for an index corresponding to the terminal device to determine the second information, and then send the second information to the first network device, to indicate that MDT data corresponding to the terminal device, that is, the first MDT data, needs to be obtained.

S204: The first network device sends the first MDT configuration to the second network device.

Correspondingly, the second network device receives the first MDT configuration from the first network device.

For example, the first network device may send the first MDT configuration to the second network device by using a retrieve UE context response message or other signaling.

In a possible implementation, the first network device may further determine the first MDT configuration from one or more stored MDT configurations based on the first information.

In a possible implementation, the first network device may further send a first response message to the second network device. The first response message indicates a reason why the first MDT configuration cannot be transmitted.

For example, when the first MDT configuration cannot be sent, the first network device may send the first response message to the second network device to indicate the following reasons why the first MDT configuration cannot be transmitted: the first MDT configuration is released, storage of the first MDT configuration times out, the first MDT configuration cannot be found, or the like.

In a possible implementation, the first network device may further send the first MDT data to the second network device.

Correspondingly, the second network device receives the first MDT data from the first network device.

For example, the first network device may send the first MDT data to the second network device by using a retrieve UE context response message or other signaling.

In a possible implementation, the first network device may further determine the first MDT data from one or more pieces of stored MDT data based on the second information.

In a possible implementation, the first network device may further send a second response message to the second network device. The second response message indicates a reason why the first MDT data cannot be transmitted. For example, when the first MDT data cannot be sent, the first network device may send the second response message to the second network device to indicate the following reasons why the first MDT data cannot be transmitted: the first MDT data is released, storage of the first MDT data times out, the first MDT data cannot be found, or the like.

S205: The second network device determines a second MDT configuration based on the first MDT configuration.

For example, the second network device may modify a format (format) of the first MDT configuration or add or delete content of the first MDT configuration (for example, delete information such as an MDT activation type and a signaling based MDT PLMN list) to obtain the second MDT configuration.

In a possible implementation, the second MDT configuration may include an immediate MDT configuration.

It should be noted that, the immediate MDT configuration in the second MDT configuration may be obtained based on the immediate MDT configuration in the first MDT configuration. For example, a part of measurement configurations (such as an average UE throughput measurement configuration or a packet loss rate measurement configuration) may be deleted from the immediate MDT configuration in the first MDT configuration to obtain the immediate MDT configuration in the second MDT configuration.

S206: The second network device sends the second MDT configuration to the terminal device.

Correspondingly, the terminal device receives the second MDT configuration from the second network device.

S207: The terminal device performs MDT measurement based on the second MDT configuration.

For example, the terminal device may perform MDT measurement based on the immediate MDT configuration in the second MDT configuration, and periodically report an MDT result to the second network device.

The measurement result may include one or more of a downlink semaphore measurement result of a serving cell and an intra-frequency/inter-frequency/inter-RAT neighboring cell, a packet data convergence protocol (packet data convergence protocol, PDCP) service data unit (service data unit, SDU) data amount, an average UE throughput, or a data packet delay.

It can be learned that, in the method provided in this embodiment of this application, after the terminal device enters the connected state from the idle state, the terminal device may send, to the newly connected second network device, the first information indicating the MDT configuration corresponding to the terminal device, so that the second network device obtains, by using the first information, the MDT configuration via the first network device previously connected to the terminal device, and delivers the MDT configuration to the terminal device. This avoids a case that the terminal device stops MDT measurement because the newly connected network device does not send the second MDT configuration to the terminal device, thereby maintaining MDT continuity, to obtain continuous MDT data, so as to meet a requirement for obtaining continuous MDT data in some scenarios. For example, the network device obtains the continuous MDT data for AI model training, to improve AI model training accuracy and improve an effect of applying the AI model.

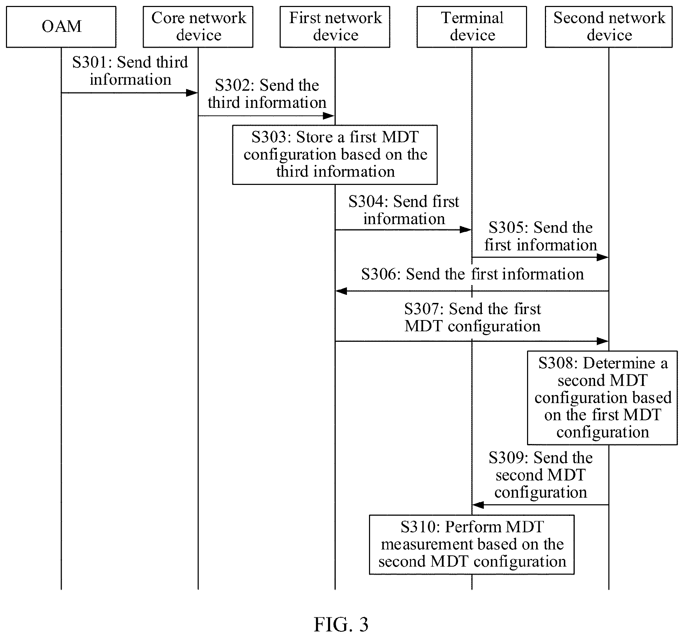

Based on the embodiment shown in FIG. 2, the following describes the communication method provided in this application with reference to signaling procedures shown in FIG. 3. It may be understood that, embodiments provided in this application may be mutually referenced, cited, or combined, and content described in the embodiment in FIG. 3 is not described again. As shown in FIG. 3, the method includes the following steps.

S301: An OAM sends third information to a core network device.

For example, in a scenario in which a terminal device needs to continuously perform MDT measurement, for example, in a scenario in which a network device needs continuous MDT data for AI model training, the OAM may send the third information to the core network device, where the third information indicates to store the foregoing first MDT configuration. For detailed descriptions of the third information, refer to content of the third information in the embodiment shown in FIG. 2.

In a possible implementation, S301 is also replaced with: An OAM sends third information to a first network device.

In a possible implementation, the OAM may further send fourth information to the core network device, where the fourth information indicates to store the foregoing first MDT data. For detailed descriptions of the fourth information, refer to content of the fourth information in the embodiment shown in FIG. 2.

For example, in a scenario in which historical MDT data needs to be obtained, for example, in a scenario in which the network device needs the historical MDT data for AI model training, the OAM may send the fourth information to the core network device or the first network device.

In a possible implementation, the OAM may alternatively send the fourth information to the first network device.

S302: The core network device sends the third information to the first network device.

S303: The first network device stores the first MDT configuration based on the third information.

For detailed descriptions of the first MDT configuration, refer to content of the first MDT configuration in the embodiment shown in FIG. 2.

In a possible implementation, the first network device may further store the first MDT data based on the fourth information.

For detailed descriptions of the first MDT data, refer to content of the first MDT data in the embodiment shown in FIG. 2.

S304: The first network device sends first information to the terminal device.

For detailed descriptions of the first information, refer to content of the first information in the embodiment shown in FIG. 2.

S305: The terminal device sends the first information to a second network device.

S306: The second network device sends the first information to the first network device.

S307: The first network device sends the first MDT configuration to the second network device.

S309: The second network device sends a second MDT configuration to the terminal device.

S310: The terminal device performs MDT measurement based on the second MDT configuration.

For example, the terminal device may perform MDT measurement based on an immediate MDT configuration in the second MDT configuration, and periodically report an MDT result to the second network device.

It should be noted that, for specific implementations of steps S304 to S310, refer to descriptions of steps S201 to S207. Details are not described herein again.

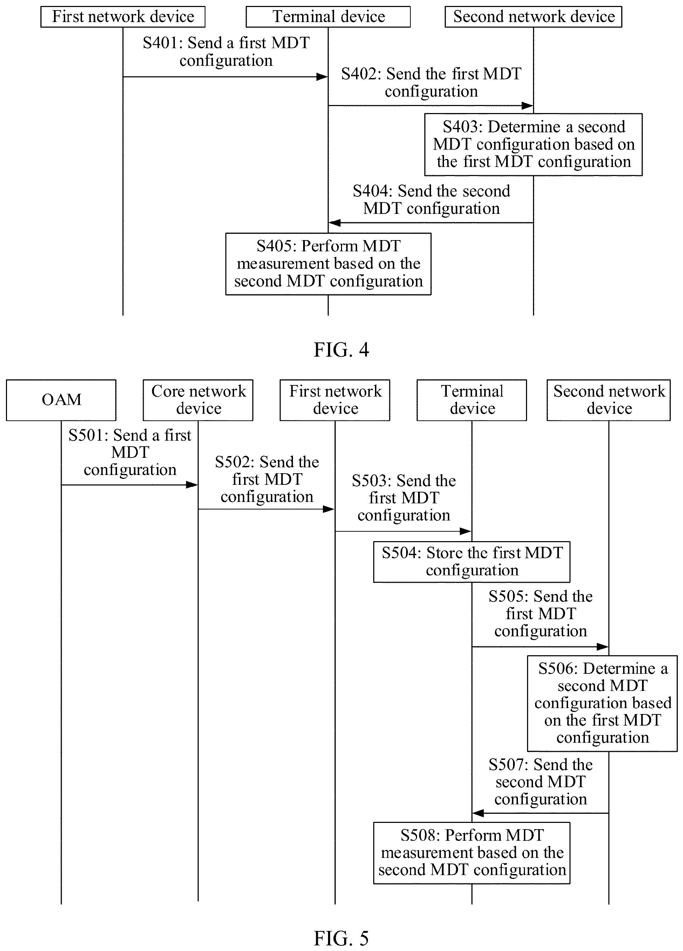

FIG. 4 shows still another communication method according to an embodiment of this application. Different from the embodiment shown in FIG. 2, in this solution, a first network device does not send the foregoing first information to a terminal, but directly sends the foregoing first MDT configuration. As shown in FIG. 4, the method includes the following steps.

S401: The first network device sends the first MDT configuration to the terminal device.

Correspondingly, the terminal device receives the first MDT configuration from the first network device. For detailed descriptions of the first MDT configuration, refer to content of the first MDT configuration in the embodiment shown in FIG. 2.

For example, in a scenario in which the terminal device needs to continuously perform MDT measurement, for example, in a scenario in which the network device needs continuous MDT data for AI model training, the first network device may send the first MDT configuration to the terminal device.

In a possible implementation, the first network device may further send first MDT data to the terminal device. For detailed descriptions of the first MDT data, refer to content of the first MDT data in the embodiment shown in FIG. 2.

Correspondingly, the terminal device receives the first MDT data from the first network device.

For example, in a scenario in which historical MDT data needs to be obtained, for example, in a scenario in which the network device needs the historical MDT data for AI model training, the first network device may send the first MDT data to the terminal device.

It should be noted that, the first MDT configuration may be obtained by the first network device from a core network device or an OAM.

For example, the first network device may receive, via the core network device, the first MDT configuration sent by the OAM.

In a possible implementation, the first network device may further send fifth information to the terminal device.

The fifth information indicates to store the first MDT configuration.

For example, in a scenario in which the terminal device needs to continuously perform MDT measurement, the first network device may send the fifth information to the terminal device.

For example, the fifth information may include an identifier of the terminal device and a retrieval range of the first MDT configuration.

The retrieval range of the first MDT configuration indicates a sending range of the first MDT configuration (that is, indicates network devices to which the first MDT configuration may be sent).

For example, the fifth information may further include retention duration of the first MDT configuration and/or an index range of the first MDT configuration.

For example, the fifth information may further include an MDT configuration retention indicator.

For example, the MDT configuration retention indicator may be indicated by using a bit. For example, if a value of a bit corresponding to the MDT configuration retention indicator is 1, it indicates that the first MDT configuration is stored, and if the value of the bit is 0, it indicates that the first MDT configuration is not stored.

For another example, the MDT configuration retention indicator may alternatively be implicitly indicated by using the first MDT configuration. For example, if the terminal device receives the first MDT configuration, the first MDT configuration is stored by default.

In a possible implementation, the fifth information may be generated by the first network device.

For example, the first network device may generate the fifth information when the terminal device needs to continuously perform MDT measurement.

In another possible implementation, the fifth information may alternatively be obtained by the first network device from another device.

For example, the first network device may receive the fifth information from the core network device or the OAM.

For example, the first network device may receive the first MDT configuration that is from the core network device or the OAM and that carries the fifth information, to obtain the fifth information.

For another example, the first network device may receive, via the core network device, the first MDT configuration that is sent by the OAM and that carries the fifth information, to obtain the fifth information.

It may be understood that, the terminal device may release some information after disconnecting from the first network device. To avoid a case that the first MDT configuration is released because the first MDT configuration is not stored, the fifth information may indicate the terminal device to store the first MDT configuration. In this way, after the terminal device disconnects from the first network device, MDT interruption caused by a failure of the terminal device to send the first MDT configuration to a second network device due to the release of the first MDT configuration is avoided.

In a possible implementation, the first network device may further send sixth information to the terminal device.

The sixth information indicates to store the first MDT data.

For example, the sixth information may include the identifier of the terminal device and a retrieval range of the first MDT data.

The retrieval range of the first MDT data indicates a sending range of the first MDT data (that is, indicates network devices to which the first MDT data may be sent).

For example, the sixth information may further include retention duration of the first MDT data and/or an index range of the first MDT data.

For example, the sixth information may further include an MDT data retention indicator.

For example, the MDT data retention indicator may be indicated by using a bit. For example, if a value of a bit corresponding to the MDT data retention indicator is 1, it indicates that the first MDT data is stored, and if the value of the bit is 0, it indicates that the first MDT data is not stored.

For another example, the MDT data retention indicator may alternatively be implicitly indicated by using the first MDT data. For example, if the terminal device receives the first MDT data, the first MDT data is stored by default.

In a possible implementation, the sixth information may be generated by the first network device.

For example, the first network device may generate the sixth information when the historical MDT data needs to be obtained.

In another possible implementation, the sixth information may alternatively be obtained by the first network device from another device.

For example, the first network device may alternatively receive the sixth information from the core network device or the OAM.

For example, the first network device may receive the first MDT configuration that is from the core network device or the OAM and that carries the sixth information, to obtain the sixth information.

For another example, the first MDT configuration that is sent by the OAM and that carries the sixth information may be received via the core network device, to obtain the sixth information.

In a possible implementation, the terminal device may alternatively store the first MDT configuration before disconnecting from the first network device.

For example, when the terminal device receives the fifth information and is in a connected state, and before the terminal device disconnects from the first network device (that is, before the terminal device switches from the connected state to an idle state), the terminal device may store the first MDT configuration until the first MDT configuration is sent to the second network device or storage of the first MDT configuration times out. That the storage of the first MDT configuration times out means that storage time of the first MDT configuration is greater than the retention duration of the first MDT configuration. The retention duration of the first MDT configuration may be preset, or may be indicated by the fifth information.

In a possible implementation, the terminal device may alternatively store the first MDT data before disconnecting from the first network device.

For example, when the terminal device receives the sixth information and is in a connected state, and before the terminal device disconnects from the first network device (that is, before the terminal device switches from the connected state to an idle state), the terminal device may store the first MDT data until the first MDT data is sent to the second network device or storage of the first MDT data times out. That the storage of the first MDT data times out means that storage time of the first MDT data is greater than the retention duration of the first MDT data. The retention duration of the first MDT data may be preset, or may be indicated by the sixth information.

It may be understood that, to avoid a case that the first MDT data is released because the first MDT data is not stored, the sixth information may indicate the terminal device to store the first MDT data. In this way, after the terminal device disconnects from the first network device, a failure of the terminal device to send the first MDT data to the second network device due to the release of the first MDT data is avoided, so that the second device can train the AI model by using the first MDT data.

S402: The terminal device sends the first MDT configuration to the second network device.

Correspondingly, the second network device receives the first MDT configuration from the terminal device.

In a possible implementation, the terminal device may send the first MDT configuration to the second network device after establishing a connection to the second network device.

For example, when switching from the connected state to the idle state and disconnecting from the first network device, the terminal device switches from the idle state to the connected state again, and after establishing an RRC connection to the second network device, sends the first MDT configuration to the second network device by using a measurement report, a UE information response message, or other signaling.

For another example, if the first MDT configuration is still retained inside the terminal device, and the second network device is in the retrieval range of the first MDT configuration, the terminal device may send the first MDT configuration to the second network device.

For another example, if the first MDT configuration is still retained inside the terminal device, but the second network device is not in the retrieval range of the first MDT configuration, the terminal device may not send the first MDT configuration to the second network device.

In a possible implementation, the terminal device may further send the first MDT data to the second network device.

Correspondingly, the second network device receives the first MDT data from the terminal device.

For example, when switching from the connected state to the idle state and disconnecting from the first network device, the terminal device may switch from the idle state to the connected state again, and after establishing an RRC connection to the second network device, send the first MDT data to the second network device by using a measurement report, a UE information response message, or other signaling.

For another example, if the first MDT data is still retained inside the terminal device, and the second network device is in the retrieval range of the first MDT data, the terminal device may send the first MDT data to the second network device.

For another example, if the first MDT data is still retained inside the terminal device, but the second network device is not in the retrieval range of the first MDT data, the terminal device may not send the first MDT data to the second network device.

In a possible implementation, the terminal device may alternatively send a fourth response message to the second network device.

The fourth response message indicates a reason why the first MDT data cannot be sent.

For example, when the first MDT data cannot be sent to the second network device, the fourth response message may be sent to the second network device to indicate the following reasons why the first MDT data cannot be transmitted: the first MDT data is released, storage of the first MDT data times out, the second network device is not within the retrieval range of the first MDT data, or the like.

In a possible implementation, the second network device may send a fifth response message to the terminal device.

The fifth response message indicates a reason for rejecting receiving the first MDT configuration.

For example, the second network device may send the fifth response message to the terminal device when there is no measurement resource, no compute resource, or no need to maintain continuous MDT.

In a possible implementation, S402 is also replaced with the following: The terminal device sends a third response message to the second network device. The third response message indicates a reason why the first MDT configuration cannot be sent.

For example, when the first MDT configuration cannot be sent to the second network device, the terminal may send the third response message to the second network device to indicate the following reasons why the first MDT configuration cannot be transmitted: the first MDT configuration is released, storage of the first MDT configuration times out, the second network device is not within the retrieval range of the first MDT configuration, or the like.

In a possible implementation, the second network device and the first network device may be a same network device.

S403: The second network device determines a second MDT configuration based on the first MDT configuration.

For example, a format of the first MDT configuration may be modified, or content of the first MDT configuration may be added or deleted to obtain the second MDT configuration.

S404: The second network device sends the second MDT configuration to the terminal device.

Correspondingly, the terminal device receives the second MDT configuration from the second network device.

S405: The terminal device performs MDT measurement based on the second MDT configuration.

For example, the terminal device may perform MDT measurement based on an immediate MDT configuration in the second MDT configuration, and periodically report an MDT result to the second network device.

It should be noted that, the immediate MDT configuration in the second MDT configuration may be obtained based on an immediate MDT configuration in the first MDT configuration. For example, a part of measurement configurations (such as an average UE throughput measurement configuration or a packet loss rate measurement configuration) may be deleted from the immediate MDT configuration in the first MDT configuration to obtain the immediate MDT configuration in the second MDT configuration.

For detailed descriptions of step S403 to step 405, refer to descriptions of step S205 to step S207 in the embodiment shown in FIG. 2.

It can be learned that, in the method provided in this embodiment of this application, after the terminal device enters the connected state from the idle state, the terminal device may send, to the newly connected second network device, the first MDT configuration including an MDT configuration corresponding to the terminal device, so that the second network device delivers the MDT configuration to the terminal device by using the first MDT configuration. This avoids a case that the terminal device stops MDT measurement because the newly connected network device does not send the second MDT configuration to the terminal device, thereby maintaining MDT continuity, to obtain continuous MDT data, so as to meet a requirement for obtaining continuous MDT data in some scenarios. For example, the network device obtains the continuous MDT data for AI model training, to improve AI model training accuracy and improve an effect of applying the AI model.

Based on the embodiment shown in FIG. 4, the following describes the communication method provided in this application with reference to signaling procedures shown in FIG. 5. Content described in the embodiment in FIG. 4 is not described again. As shown in FIG. 5, the method includes the following steps.

S501: An OAM sends a first MDT configuration to a core network device.

For detailed descriptions of the first MDT configuration, refer to content of the first MDT configuration in the embodiment shown in FIG. 2.

In a possible implementation, S501 is also replaced with the following: An OAM sends a first MDT configuration to a first network device.

In a possible implementation, the OAM may further send fifth information to the core network device, where the fifth information indicates to store the first MDT configuration. For detailed descriptions of the fifth information, refer to content of the fifth information in the embodiment shown in FIG. 4.

In a possible implementation, the OAM may alternatively send the fifth information to the first network device.

In a possible implementation, the OAM may further send sixth information to the core network device, where the sixth information indicates to store first MDT data. For detailed descriptions of the sixth information, refer to content of the sixth information in the embodiment shown in FIG. 4.

In a possible implementation, the OAM may alternatively send the sixth information to the first network device.

S502: The core network device sends the first MDT configuration to the first network device.

In a possible implementation, the core network device may further send fifth information to the first network device.

The fifth information may be generated by the core network device, or may be the fifth information received from the OAM.

For example, the core network device may generate the fifth information when MDT continuity needs to be maintained.

In a possible implementation, the core network device may further send sixth information to the first network device.

The sixth information may be generated by the core network device, or may be the sixth information received from the OAM.

For example, the first network device may generate the sixth information when historical MDT data needs to be obtained.

S503: The first network device sends the first MDT configuration to a terminal device.

It should be noted that, for a specific implementation of S503, refer to descriptions of S401. Details are not described herein again.

S504: The terminal device stores the first MDT configuration.

In a possible implementation, the terminal device may store the first MDT configuration before disconnecting from the first network device.

For example, if the core network device sends the fifth information to the first network device, and then the first network device sends the fifth information to the terminal device, the terminal device may maintain a connection to the first network device when the terminal device receives the fifth information and is in a connected state. Before the terminal device disconnects from the first network device (that is, before the terminal device switches from the connected state to an idle state), the terminal device may store the first MDT configuration until the first MDT configuration is sent to a second network device or storage of the first MDT configuration times out.

In a possible implementation, the terminal device may store the first MDT data before disconnecting from the first network device.

For example, if the core network device sends the sixth information to the first network device, and then the first network device sends the sixth information to the terminal device, the terminal device may maintain a connection to the first network device when the terminal device receives the sixth information and is in a connected state. Before the terminal device disconnects from the first network device (that is, before the terminal device switches from the connected state to an idle state), the terminal device may store the first MDT data until the first MDT data is sent to a second network device or storage of the first MDT data times out.

For detailed descriptions of the first MDT data, refer to content of the first MDT data in the embodiment shown in FIG. 2.

S505: The terminal device sends the first MDT configuration to the second network device.

S506: The second network device determines a second MDT configuration based on the first MDT configuration.

S507: The second network device sends the second MDT configuration to the terminal device.

S508: The terminal device performs MDT measurement based on the second MDT configuration.

It should be noted that, for specific implementations of steps S505 to S508, refer to descriptions of steps S402 to S405. Details are not described herein again.

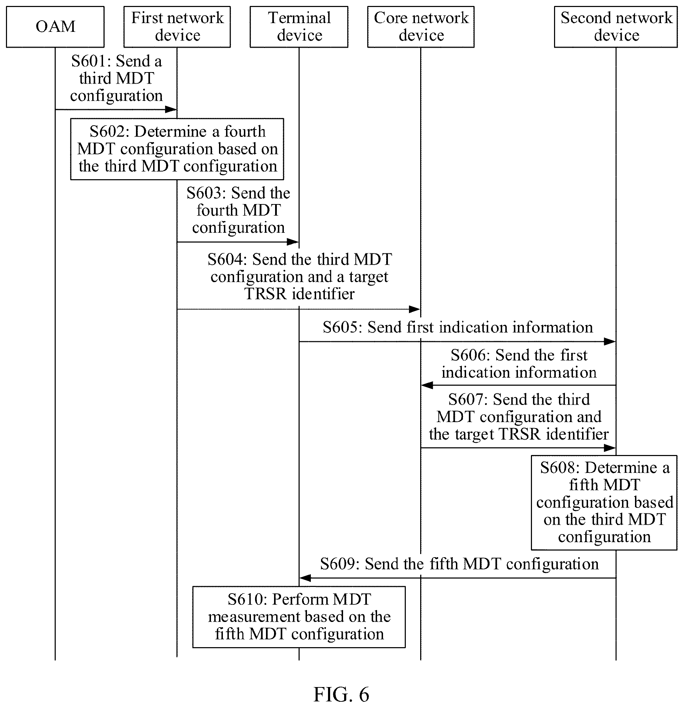

FIG. 6 shows still another communication method according to an embodiment of this application. This embodiment and the embodiments provided in FIG. 2 and FIG. 4 may be mutually referenced, and content described in the embodiments provided in FIG. 2 and FIG. 4 is not described in this embodiment. Different from the embodiment shown in FIG. 2, in this solution, an MDT configuration sent by a first network device to a terminal includes a trace session (Trace Reference, TR) of an immediate MDT configuration and a TR of a logged MDT configuration, and values of the two TRs are the same. The method includes the following steps.

S601: An OAM sends a third MDT configuration to the first network device.

Correspondingly, the first network device receives the third MDT configuration from the OAM.

The third MDT configuration is a management based MDT (management based MDT) configuration, and an MDT activation type is "immediate MDT and logged MDT".

It should be noted that, the MDT activation type "immediate MDT and logged MDT" is a newly added MDT activation type in this embodiment of this application. The MDT activation type "immediate MDT and logged MDT" indicates a terminal device to perform immediate MDT measurement and logged MDT measurement. For example, based on an MDT configuration whose MDT activation type is "immediate MDT and logged MDT", the terminal device may perform immediate MDT measurement in a connected state, and perform logged MDT measurement in an idle state.

The third MDT configuration includes the MDT activation type, the immediate MDT configuration, the logged MDT configuration, and TR information. The TR information indicates a first TR and a second TR, where the first TR is the TR of the immediate MDT configuration, and the second TR is the TR of the logged MDT configuration. The first TR is the same as the second TR.

In a possible implementation, the first TR and the second TR may be indicated by using a same TR.

In another possible implementation, the first TR and the second TR may be indicated by using two same TRs.

Immediate MDT data and logged MDT data may be associated by using the TR. For example, if the TRs of the immediate MDT configuration and the logged MDT configuration are the same, it may be determined that the immediate MDT data obtained through measurement by using the immediate MDT configuration and the logged MDT data obtained through measurement by using the logged MDT configuration are obtained through measurement by using a same MDT session.

In a possible implementation, the third MDT configuration may further include an MDT area scope.

S602: The first network device determines a fourth MDT configuration based on the third MDT configuration.

The fourth MDT configuration includes the MDT activation type, the immediate MDT configuration, the logged MDT configuration, and the TR information.

For example, the first network device may modify a format of the third MDT configuration or add or delete content of the third MDT configuration (for example, delete an identifier of the first network device) to obtain the fourth MDT configuration.

In a possible implementation, the fourth MDT configuration may further include an identifier of the terminal device.

S603: The first network device sends the fourth MDT configuration to the terminal device.

Correspondingly, the terminal device receives the fourth MDT configuration from the first network device.

In a possible implementation, the first network device may further send a target trace recording session reference (Trace Recording Session Reference, TRSR) identifier to the terminal device.

The target TRSR identifier is a TRSR identifier allocated by the first network device to the terminal device. The terminal device corresponding to the MDT data may be identified by using the TRSR identifier.

S604: The first network device sends the third MDT configuration and the target TRSR identifier to a core network device.

Correspondingly, the core network device receives the third MDT configuration and the target TRSR identifier from the first network device.

In a possible implementation, the core network device may store the third MDT configuration and the target TRSR identifier in a UE context.

In a possible implementation, the core network device may send the third MDT configuration and the target TRSR to a second network device. For example, when the core network device receives the third MDT configuration and senses that the terminal device establishes a connection to the second network device, the core network device may actively send the third MDT configuration and the target TRSR identifier to the second network device.

S605: The terminal device sends first indication information to the second network device.

Correspondingly, the second network device receives the first indication information from the terminal device.

The first indication information indicates the third MDT configuration and the target TRSR identifier that are stored in the core network device. The first indication information includes the target TRSR identifier and/or the identifier of the terminal device.

For example, when switching from the connected state to the idle state and disconnecting from the first network device, the terminal device may switch from the idle state to the connected state again, and after establishing an RRC connection to the second network device, send, to the second network device, the first indication information that carries the target TRSR identifier and the identifier of the terminal device.

In a possible implementation, the first indication information may further include the TR information and/or the MDT activation type.

In a possible implementation, the identifier of the terminal device may be obtained by the terminal device based on the fourth MDT configuration, or may be obtained by the terminal device by using other signaling.

In a possible implementation, the terminal device may further send second indication information to the second network device. The second indication information indicates that a logged MDT measurement report is stored in the terminal device.

In a possible implementation, the first indication information and the second indication information may be same information.

In a possible implementation, the terminal device may further send the logged MDT measurement report to the second network device.

For example, when receiving first response information, the terminal device may send the logged MDT measurement report to the second network device. The first response information is used to request the logged MDT measurement report.

In a possible implementation, after receiving the logged MDT measurement report, the second network device may further send the logged MDT measurement report to a trace collection entity (trace collection entity, TCE).

S606: The second network device sends the first indication information to the core network device.

Correspondingly, the core network device receives the first indication information from the second network device.

In a possible implementation, the second network device may further send the TR information and/or the MDT activation type to the core network device.

S607: The core network device sends the third MDT configuration and the target TRSR identifier to the second network device.

Correspondingly, the second network device receives the third MDT configuration and the target TRSR identifier from the core network device.

For example, the core network device may retrieve the UE context by using the TR information and the target TRSR identifier to determine the third MDT configuration, and then send the third MDT configuration to the second network device.

S608: The second network device determines a fifth MDT configuration based on the third MDT configuration.

For example, the second network device may modify the format of the third MDT configuration or add or delete the content of the third MDT configuration to obtain the fifth MDT configuration.

It should be noted that, in a process in which the second network device determines the fifth MDT configuration based on the third MDT configuration, a new TRSR identifier does not need to be allocated to the terminal device, but the target TRSR identifier may be reused.

In a possible implementation, the second network device may associate an immediate MDT measurement report and the logged MDT measurement report of the terminal device by using the target TRSR identifier and the TR information.

In a possible implementation, the fifth MDT configuration may be the same as the fourth MDT configuration.

S609: The second network device sends the fifth MDT configuration to the terminal device.

Correspondingly, the terminal device receives the fifth MDT configuration from the second network device.

S610: The terminal device performs MDT measurement based on the fifth MDT configuration.

It can be learned that, in the method provided in this embodiment of this application, the new MDT activation type "immediate MDT and logged MDT" is introduced, so that the OAM can send the immediate MDT configuration and the logged MDT configuration that have the same TR, and associate the immediate MDT data and the logged MDT data of the same terminal device by using the TR and the target TRSR identifier. This avoids a failure of obtaining continuous MDT data of the same terminal device because the immediate MDT data and the logged MDT data of the same terminal device cannot be associated due to a difference between the TR of the immediate MDT configuration and the TR of the logged MDT configuration of the same terminal device. Therefore, a requirement for obtaining continuous MDT data in some scenarios is met. For example, the network device obtains the continuous MDT data for AI model training, to improve AI model training accuracy and improve an effect of applying an AI model.

In addition, after the terminal device enters the connected state from the idle state, the terminal device may send, to the newly connected second network device, the first indication information that carries the target TRSR identifier and/or the identifier of the terminal, so that the second network device obtains the MDT configuration from the core network device by using the first indication information, and delivers the MDT configuration to the terminal device. This avoids a case that the terminal device stops the MDT measurement because the newly connected network device does not send the fifth MDT configuration to the terminal device, thereby maintaining MDT continuity, to obtain continuous MDT data, so as to meet a requirement for obtaining continuous MDT data in some scenarios.

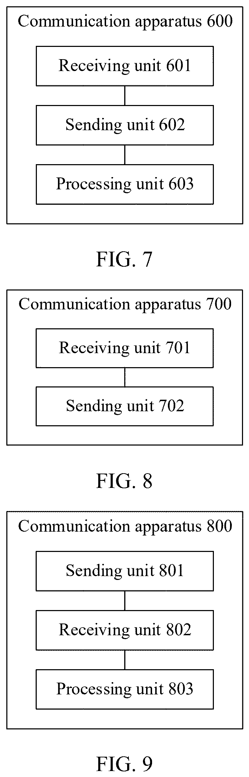

The following describes, with reference to FIG. 7 to FIG. 15, a communication apparatus configured to perform the foregoing communication method.

It may be understood that, to implement functions of the foregoing communication method, the communication apparatus includes corresponding hardware and/or software modules for performing the functions. With reference to algorithm steps in the examples described in embodiments disclosed in this specification, embodiments of this application can be implemented in a form of hardware or a combination of the hardware and computer software. Whether a function is performed by hardware or hardware driven by computer software depends on particular applications and design constraint conditions of the technical solutions. A person skilled in the art may use different methods to implement the described functions for each particular application with reference to embodiments, but it should not be considered that the implementation goes beyond the scope of embodiments of this application.

In embodiments of this application, the communication apparatus may be divided into functional modules based on the foregoing method examples. For example, each functional module may be obtained through division based on each corresponding function, or two or more functions may be integrated into one processing module. The integrated module may be implemented in a form of hardware. It should be noted that, module division in embodiments is an example and is merely logical function division. In an actual implementation, there may be another division manner.

When each functional module is obtained through division based on each corresponding function, FIG. 7 is a diagram of possible composition of the communication apparatus in the foregoing embodiments. The apparatus may be a terminal device, or may be a module (for example, a processor, a chip, or a chip system) used in the terminal device, or may be a logical node, a logical module, or software that can implement all or a part of functions of the terminal device. As shown in FIG. 7, the communication apparatus 700 may include a receiving unit 701, a sending unit 702, and a processing unit 703.

The receiving unit 701 is configured to receive first information from a first network device, where the first information indicates a first MDT configuration, and the first MDT configuration includes an MDT configuration corresponding to a terminal device.

The sending unit 702 is configured to send the first information to a second network device.

The receiving unit 701 is further configured to receive a second MDT configuration from the second network device, where the second MDT configuration is obtained based on the first MDT configuration.

The processing unit 703 is configured to perform MDT measurement based on the second MDT configuration.

In a possible implementation, the processing unit 703 is further configured to store the first information before disconnecting from the first network device.

In a possible implementation, the sending unit 702 is specifically configured to send the first information to the second network device after establishing a connection to the second network device.

In a possible implementation, the second MDT configuration may include an immediate MDT configuration.

In a possible implementation, the first information may include an index of the first MDT configuration.

In a possible implementation, the receiving unit 701 is further configured to receive second information from the first network device, where the second information indicates first MDT data, and the first MDT data is obtained through measurement based on the first MDT configuration.

In a possible implementation, the sending unit 702 is further configured to send the second information to the second network device.

In a possible implementation, the second information may include an index of the first MDT data.

When each functional module is obtained through division based on each corresponding function, FIG. 8 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 8, the communication apparatus 800 may include a receiving unit 801 and a sending unit 802.

The receiving unit 801 is configured to receive first information from a second network device, where the first information indicates a first MDT configuration, and the first MDT configuration includes an MDT configuration corresponding to a terminal device.

The sending unit 802 is configured to send the first MDT configuration to the second network device.

In a possible implementation, the sending unit 802 is further configured to send the first information to the terminal device.

In a possible implementation, the receiving unit 801 is further configured to receive third information from a core network device or an OAM, where the third information indicates to store the first MDT configuration.

In a possible implementation, the third information may include an identifier of the terminal device and an index of the first MDT configuration.

In a possible implementation, the third information may further include retention duration of the first MDT configuration and/or an index range of the first MDT configuration.

In a possible implementation, the receiving unit 801 is further configured to receive second information from the second network device, where the second information indicates first MDT data, and the first MDT data is obtained through measurement based on the first MDT configuration.

In a possible implementation, the sending unit 802 is further configured to send the first MDT data to the second network device.

In a possible implementation, the sending unit 802 is further configured to send the second information to the terminal device, where the second information indicates the first MDT data, and the first MDT data is obtained through measurement based on the first MDT configuration.

In a possible implementation, the receiving unit 801 is further configured to receive fourth information from the core network device or the OAM, where the fourth information indicates to store the first MDT data, and the first MDT data is obtained through measurement based on the first MDT configuration.

In a possible implementation, the fourth information may include the identifier of the terminal device and an index of the first MDT data.

In a possible implementation, the fourth information may further include retention duration of the first MDT data and/or an index range of the first MDT data.

When each functional module is obtained through division based on each corresponding function, FIG. 9 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 9, the communication apparatus 900 may include a sending unit 901, a receiving unit 902, and a processing unit 903.

The sending unit 901 is configured to send first information to a first network device, where the first information indicates a first MDT configuration, and the first MDT configuration includes an MDT configuration corresponding to a terminal device.

The receiving unit 902 is configured to receive the first MDT configuration from the first network device.

The processing unit 903 is configured to determine a second MDT configuration based on the first MDT configuration.

The sending unit 901 is further configured to send the second MDT configuration to the terminal device.

In a possible implementation, the receiving unit 902 is further configured to receive the first information from the terminal device.

In a possible implementation, the sending unit 901 is further configured to send second information to the first network device, where the second information indicates first MDT data, and the first MDT data is obtained through measurement based on the first MDT configuration.

In a possible implementation, the receiving unit 902 is further configured to receive the first MDT data from the first network device.

In a possible implementation, the receiving unit 902 is further configured to receive the second information from the terminal device, where the second information indicates the first MDT data, and the first MDT data is obtained through measurement based on the first MDT configuration.

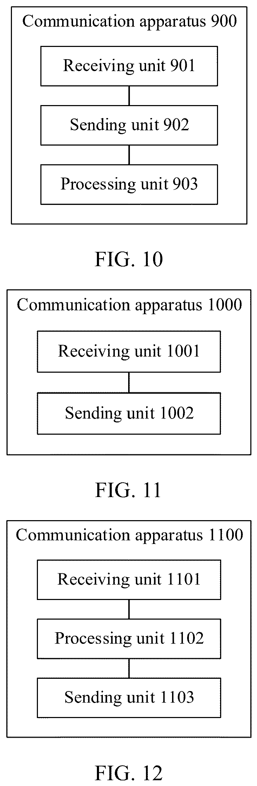

When each functional module is obtained through division based on each corresponding function, FIG. 10 is a diagram of possible composition of the communication apparatus in the foregoing embodiments. The apparatus may be a terminal device, or may be a module (for example, a processor, a chip, or a chip system) used in the terminal device, or may be a logical node, a logical module, or software that can implement all or a part of functions of the terminal device. As shown in FIG. 10, the communication apparatus 1000 may include a receiving unit 1001, a sending unit 1002, and a processing unit 1003.

The receiving unit 1001 is configured to receive a first MDT configuration from a first network device, where the first MDT configuration includes an MDT configuration corresponding to a terminal device.

The sending unit 1002 is configured to send the first MDT configuration to a second network device.

The receiving unit 1001 is further configured to receive a second MDT configuration from the second network device, where the second MDT configuration is obtained based on the first MDT configuration.

The processing unit 1003 is configured to perform MDT measurement based on the second MDT configuration.

In a possible implementation, the processing unit 1003 is further configured to store the first MDT configuration before disconnecting from the first network device.

In a possible implementation, the sending unit 1002 is specifically configured to send the first MDT configuration to the second network device after establishing a connection to the second network device.

In a possible implementation, the receiving unit 1001 is further configured to receive fifth information from the first network device, where the fifth information indicates to store the first MDT configuration.

In a possible implementation, the receiving unit 1001 is further configured to receive first MDT data from the first network device, where the first MDT data is obtained through measurement based on the first MDT configuration.

In a possible implementation, the sending unit 1002 is further configured to send the first MDT data to the second network device.

In a possible implementation, the receiving unit 1001 is further configured to receive sixth information from the first network device, where the sixth information indicates to store the first MDT data, and the first MDT data is obtained through measurement based on the first MDT configuration.

When each functional module is obtained through division based on each corresponding function, FIG. 11 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 11, the communication apparatus 1100 may include a receiving unit 1101 and a sending unit 1102.

The receiving unit 1101 is configured to receive a first MDT configuration from a core network device or an OAM, where the first MDT configuration includes an MDT configuration corresponding to a terminal device.

The sending unit 1102 is configured to send the first MDT configuration to the terminal device.

In a possible implementation, the sending unit 1102 is further configured to send fifth information to the terminal device, where the fifth information indicates to store the first MDT configuration.

In a possible implementation, the sending unit 1102 is further configured to send first MDT data to the terminal device, where the first MDT data is obtained through measurement based on the first MDT configuration.

In a possible implementation, the sending unit 1102 is further configured to send sixth information to the terminal device, where the sixth information indicates to store the first MDT data, and the first MDT data is obtained through measurement based on the first MDT configuration.

When each functional module is obtained through division based on each corresponding function, FIG. 12 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 12, the communication apparatus 1200 may include a receiving unit 1201, a processing unit 1202, and a sending unit 1203.

The receiving unit 1201 is configured to receive a first MDT configuration from a terminal device, where the first MDT configuration includes an MDT configuration corresponding to the terminal device.

The processing unit 1202 is configured to determine a second MDT configuration based on the first MDT configuration.

The sending unit 1203 is configured to send the second MDT configuration to the terminal device.

In a possible implementation, the receiving unit 1201 is further configured to receive first MDT data from the terminal device, where the first MDT data is obtained through measurement based on the first MDT configuration.

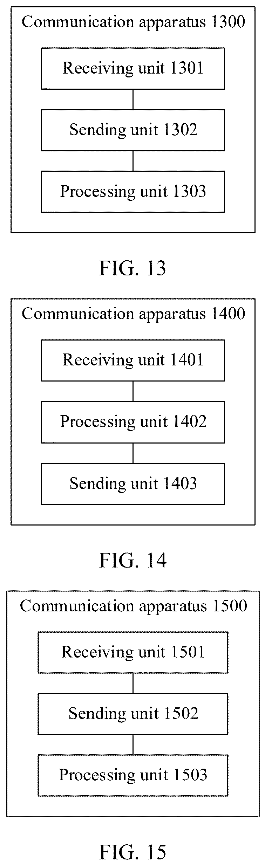

When each functional module is obtained through division based on each corresponding function, FIG. 13 is a diagram of another possible composition of the communication apparatus in the foregoing embodiments. The apparatus may be a terminal device, or may be a module (for example, a processor, a chip, or a chip system) used in the terminal device, or may be a logical node, a logical module, or software that can implement all or a part of functions of the terminal device. As shown in FIG. 13, the communication apparatus 1300 may include a receiving unit 1301, a sending unit 1302, and a processing unit 1303.

The receiving unit 1301 is configured to receive a fourth MDT configuration from a first network device.

The sending unit 1302 is configured to send first indication information to a second network device. The first indication information includes an identifier of a terminal device. The foregoing fifth MDT configuration is obtained based on the foregoing third MDT configuration.

The receiving unit 1301 is further configured to receive a fifth MDT configuration from the second network device.

The processing unit 1303 is configured to perform MDT measurement based on the fifth MDT configuration.

The fourth MDT configuration is obtained based on the third MDT configuration. The third MDT configuration is a management based MDT configuration, and an MDT activation type is "immediate MDT and logged MDT". The third MDT configuration includes the MDT activation type, an immediate MDT configuration, a logged MDT configuration, and TR information. The TR information indicates a first TR and a second TR, where the first TR is a TR of the immediate MDT configuration, and the second TR is a TR of the logged MDT configuration. The first TR is the same as the second TR. The fourth MDT configuration includes the MDT activation type, the immediate MDT configuration, the logged MDT configuration, and the TR information. The first indication information indicates the third MDT configuration stored in a core network device.

In a possible implementation, the receiving unit 1301 is further configured to receive a target TRSR identifier from the first network device, where the first indication information may include the target TRSR identifier and/or the identifier of the terminal device. The target TRSR identifier is a TRSR identifier allocated by the first network device to the terminal device. The terminal device corresponding to the MDT data may be identified by using the TRSR identifier.

In a possible implementation, the sending unit 1302 is further configured to send second indication information to the second network device. The second indication information indicates that a logged MDT measurement report is stored in the terminal device.

In a possible implementation, the first indication information and the second indication information may be same information.

In a possible implementation, the sending unit 1302 is further configured to send the logged MDT measurement report to the second network device.

When each functional module is obtained through division based on each corresponding function, FIG. 14 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 14, the communication apparatus 1400 may include a receiving unit 1401, a processing unit 1402, and a sending unit 1403.

The receiving unit 1401 is configured to receive a third MDT configuration sent by a core network device.

The processing unit 1402 is configured to determine a fourth MDT configuration based on the third MDT configuration.

The sending unit 1403 is configured to send the fourth MDT configuration to a terminal device.

The third MDT configuration is a management based MDT configuration, and an MDT activation type is "immediate MDT and logged MDT". The third MDT configuration includes the MDT activation type, an immediate MDT configuration, a logged MDT configuration, and TR information. The TR information indicates a first TR and a second TR, where the first TR is a TR of the immediate MDT configuration, and the second TR is a TR of the logged MDT configuration. The first TR is the same as the second TR. The fourth MDT configuration is an MDT configuration corresponding to the terminal device.

In a possible implementation, the sending unit 1403 is further configured to send the fourth MDT configuration and a target TRSR identifier to the core network device. The target TRSR identifier is a TRSR identifier allocated by a first network device to the terminal device.

In a possible implementation, the first TR and the second TR may be indicated by using a same TR.

In another possible implementation, the first TR and the second TR may be indicated by using two same TRs.

In a possible implementation, the third MDT configuration may further include an MDT area scope.

In a possible implementation, the fourth MDT configuration may further include an identifier of the terminal device.

In a possible implementation, the sending unit 1403 is further configured to send the target TRSR identifier to the terminal device.

When each functional module is obtained through division based on each corresponding function, FIG. 15 is a diagram of another possible composition of the communication apparatus in the foregoing embodiments. The apparatus may be a network device, or may be a module (for example, a processor, a chip, or a chip system) used in the network device, or may be a logical node, a logical module, or software that can implement all or a part of functions of the network device. As shown in FIG. 12, the communication apparatus 1500 may include a receiving unit 1501, a sending unit 1502, and a processing unit 1503.

The receiving unit 1501 is configured to receive first indication information from a terminal device.

The sending unit 1502 is configured to send the first indication information to a core network device.

The receiving unit 1501 is configured to receive a third MDT configuration sent by the core network device.

The processing unit 1503 is configured to determine a fifth MDT configuration based on the third MDT configuration.

The sending unit 1502 is configured to send the fifth MDT configuration to the terminal device.

The first indication information indicates the third MDT configuration stored in the core network device. The first indication information includes an identifier of the terminal device. The third MDT configuration includes an MDT configuration corresponding to the terminal device.

In a possible implementation, the receiving unit 1501 is further configured to receive the third MDT configuration and a target TRSR identifier that are sent by the core network device.

In a possible implementation, the first indication information indicates the third MDT configuration and the target TRSR identifier that are stored in the core network device, where the first indication information includes the target TRSR identifier and/or the identifier of the terminal device.

In a possible implementation, the receiving unit 1501 is further configured to receive second indication information sent by the terminal device. The second indication information indicates that a logged MDT measurement report is stored in the terminal device.

In a possible implementation, the sending unit 1503 is further configured to send first response information to the terminal device, where the first response information is used to request the logged MDT measurement report.

In a possible implementation, the receiving unit 1501 is further configured to receive the logged MDT measurement report sent by the terminal device.

In a possible implementation, the sending unit 1503 is further configured to send the logged MDT measurement report to a TCE.

In a possible implementation, the sending unit 1503 is further configured to send TR information and/or an MDT activation type to the core network device.

In a possible implementation, the processing unit 1502 is further configured to associate an immediate MDT measurement report and the logged MDT measurement report of the terminal device by using the target TRSR identifier and the TR information.

In a possible implementation, the fifth MDT configuration may be the same as a fourth MDT configuration.

It may be understood that, for more detailed descriptions of functions performed by the units of the communication apparatuses described in FIG. 7 to FIG. 15, refer to descriptions of steps performed by the terminal device or the network device in the foregoing method embodiments.

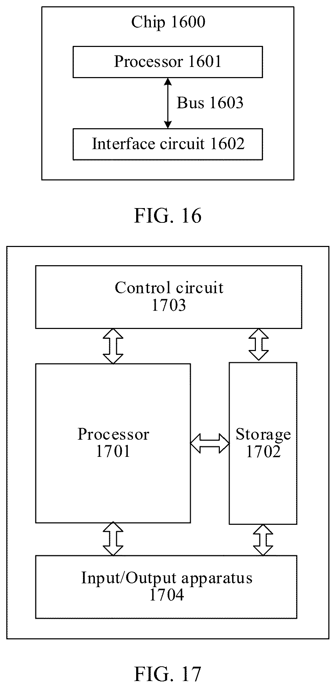

An embodiment of this application further provides a chip. FIG. 16 is a diagram of a structure of a chip 1600. The chip 1600 includes one or more processors 1601 and an interface circuit 1602. Optionally, the chip 1600 may further include a bus 1603.

The processor 1601 may be an integrated circuit chip and has a signal processing capability. In an implementation process, steps in the foregoing communication methods may be completed through an integrated logic circuit of hardware in the processor 1601, or by using instructions in a form of software.

For example, the processor 1601 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 1602 may be configured to send or receive data, instructions, or information. The processor 1601 may process the data, the instructions, or other information received through the interface circuit 1602, and may send processed information through the interface circuit 1602.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the communication apparatus in embodiments of this application. Optionally, the interface circuit 1602 may be configured to output an execution result of the processor 1601. For the communication method provided in one or more of embodiments of this application, refer to the foregoing embodiments. Details are not described herein again.

It should be noted that, a function corresponding to each of the processor 1601 and the interface circuit 1602 may be implemented by using a hardware design, may be implemented by using a software design, or may be implemented by using a combination of software and hardware. This is not limited herein.

FIG. 17 is a diagram of a structure of a communication apparatus according to an embodiment of this application. The communication apparatus is applicable to scenarios shown in the foregoing method embodiments. For ease of description, FIG. 17 shows only main components of the communication apparatus, including a processor 1701, a memory 1702, a control circuit 1703, and an input/output apparatus 1704. The processor 1701 is mainly configured to: process a communication protocol and communication data, execute a software program, and process data of the software program. The memory 1702 is mainly configured to store the software program and the data. The control circuit 1703 is mainly configured to supply power and transmit various electrical signals. The input/output apparatus 1704 is mainly configured to: receive data input by a user and output data to the user.

When the communication apparatus is the processor 1701, the control circuit 1703 may be a mainboard. The memory 1702 includes a medium having a storage function, for example, a hard disk, a RAM, or a ROM. The processor 1701 may include a baseband processor 1701 and a central processing unit. The baseband processor is mainly configured to process the communication protocol and the communication data. The central processing unit is mainly configured to: control the entire communication apparatus, execute the software program, and process the data of the software program. The input/output apparatus 1704 includes a display, a keyboard, a mouse, and the like. The control circuit 1703 may further include or be connected to a transceiver circuit or a transceiver, for example, a network cable interface, and is configured to send or receive data or a signal, for example, perform data transmission and communication with another device. Further, the control circuit may include an antenna, configured to receive and send a radio signal, and configured to perform data/signal transmission with another device.

An embodiment of this application further provides a communication apparatus. The apparatus includes at least one processor. When the at least one processor executes program code or instructions, the foregoing related method steps are implemented to implement the communication method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a communication apparatus, the communication apparatus is enabled to perform the foregoing related method steps to implement the communication method in the foregoing embodiments.

An embodiment of this application further provides a computer program product. When the computer program product runs on a computer, the computer is enabled to perform the foregoing related steps, to implement the communication method in the foregoing embodiments.

An embodiment of this application further provides a communication apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, to enable the chip to perform the communication method in the foregoing method embodiments.

An embodiment of this application further provides a communication system. The communication system includes a plurality of communication apparatuses. The communication apparatus is configured to perform the communication method in the foregoing method embodiments.

It should be understood that, sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

## Claims

1. A communication method, wherein the method comprises:
receiving first information from a first network device, wherein the first information indicates a first minimization of drive-test MDT configuration, and the first MDT configuration comprises an MDT configuration corresponding to a terminal device;
sending the first information to a second network device;
receiving a second MDT configuration from the second network device, wherein the second MDT configuration is obtained based on the first MDT configuration; and
performing MDT measurement based on the second MDT configuration.

2. The method according to claim 1, wherein the method further comprises:
storing the first information before disconnecting from the first network device.

3. The method according to claim 1 or 2, wherein the sending the first information to the second network device comprises:
sending the first information to the second network device after establishing a connection to the second network device.

4. The method according to any one of claims 1 to 3, wherein the second MDT configuration comprises an immediate minimization of drive-test immediate MDT configuration.

5. The method according to any one of claims 1 to 4, wherein the first information comprises an index of the first MDT configuration.

6. The method according to any one of claims 1 to 5, wherein the method further comprises:
receiving second information from the first network device, wherein the second information indicates first MDT data, and the first MDT data is obtained through measurement based on the first MDT configuration; and
sending the second information to the second network device.

7. The method according to claim 6, wherein the second information comprises an index of the first MDT data.

8. A communication method, wherein the method comprises:
receiving first information from a second network device, wherein the first information indicates a first MDT configuration, and the first MDT configuration comprises an MDT configuration corresponding to a terminal device; and
sending the first MDT configuration to the second network device.

9. The method according to claim 8, wherein the method further comprises:
sending the first information to the terminal device.

10. The method according to claim 8 or 9, wherein the method further comprises:
receiving third information from a core network device or an operation, administration, and maintenance OAM, wherein the third information indicates to store the first MDT configuration.

11. The method according to claim 11, wherein the third information comprises an identifier of the terminal device and an index of the first MDT configuration.

12. The method according to claim 11, wherein the third information further comprises retention duration of the first MDT configuration and/or an index range of the first MDT configuration.

13. The method according to any one of claims 8 to 12, wherein the method further comprises:
receiving second information from the second network device, wherein the second information indicates first MDT data, and the first MDT data is obtained through measurement based on the first MDT configuration; and
sending the first MDT data to the second network device.

14. The method according to any one of claims 8 to 13, wherein the method further comprises:
sending the second information to the terminal device, wherein the second information indicates the first MDT data, and the first MDT data is obtained through measurement based on the first MDT configuration.

15. The method according to any one of claims 8 to 14, wherein the method further comprises:
receiving fourth information from the core network device or the OAM, wherein the fourth information indicates to store the first MDT data, and the first MDT data is obtained through measurement based on the first MDT configuration.

16. The method according to claim 15, wherein the fourth information comprises the identifier of the terminal device and an index of the first MDT data.

17. The method according to claim 16, wherein the fourth information further comprises retention duration of the first MDT data and/or an index range of the first MDT data.

18. A communication method, wherein the method comprises:
sending first information to a first network device, wherein the first information indicates a first MDT configuration, and the first MDT configuration comprises an MDT configuration corresponding to a terminal device;
receiving the first MDT configuration from the first network device;
determining a second MDT configuration based on the first MDT configuration; and
sending the second MDT configuration to the terminal device.

19. The method according to claim 18, wherein the method further comprises:
receiving the first information from the terminal device.

20. The method according to claim 18 or 19, wherein the method further comprises:
sending second information to the first network device, wherein the second information indicates first MDT data, and the first MDT data is obtained through measurement based on the first MDT configuration; and
receiving the first MDT data from the first network device.

21. The method according to any one of claims 18 to 20, wherein the method further comprises:
receiving the second information from the terminal device, wherein the second information indicates the first MDT data, and the first MDT data is obtained through measurement based on the first MDT configuration.

22. A communication apparatus, comprising a module configured to perform the method according to any one of claims 1 to 7, the method according to any one of claims 8 to 17, or the method according to any one of claims 18 to 21.

23. A communication apparatus, comprising a processor, wherein the processor is coupled to a memory, the memory is configured to store instructions, and when the instructions are executed by the processor, the apparatus is enabled to perform the method according to any one of claims 1 to 7, the method according to any one of claims 8 to 17, or the method according to any one of claims 18 to 21.

24. A computer-readable storage medium, configured to store a computer program, wherein when the computer program is run, the method according to any one of claims 1 to 7, the method according to any one of claims 8 to 17, or the method according to any one of claims 18 to 21 is performed.

25. A computer program product, wherein the computer program product comprises instructions, and when the instructions are run, the method according to any one of claims 1 to 7, the method according to any one of claims 8 to 17, or the method according to any one of claims 18 to 21 is performed.

26. A chip, comprising at least one processor and a memory, wherein the at least one processor executes a program or instructions stored in the memory, to enable the information processing apparatus to implement the method according to any one of claims 1 to 7, the method according to any one of claims 8 to 17, or the method according to any one of claims 18 to 21.
